# EUROPEAN PATENT APPLICATION

(11) **EP 4 524 867 A1**
(43) Date of publication of application: **19.03.2025**
(21) Application number: 23196775.3
(22) Date of filing: 12.09.2023
(51) Int. Cl.: G06Q 40/08, G06Q 30/0201

(54) **COMPUTER-IMPLEMENTED METHOD AND SYSTEM FOR VERIFYING A FINANCIAL IMPACT OF A REAL-WORLD EVENT ON AN ENTITY**

(71) Applicant: Mastercard International Incorporated, Purchase NY 10577 (US)
(72) Inventor: OLLIER, Joanne Elizabeth, Holmes Chapel, CW4 7QP (GB); POLYBLANK, Ruth, Kingsford, CO2 0HT (GB); GLENISTER, Alice May, Kenley, CR8 5HY (GB)
(74) Representative: Murgitroyd & Company

(57) **Abstract**

The present disclosure relates to a computer-implemented method (300) of verifying a financial impact of a real-world event on a first entity, the method (300) comprising: receiving (302) a request to validate the financial impact of the real-world event on the first entity, wherein the request includes a duration of time over which the real-world event occurred; retrieving (304), from a data store (120), historical transaction insight data relating to transactions at a group of entities including the first entity; determining (306), based on a first subset of the retrieved historical transaction insight data corresponding to the duration of time, a first value indicative of an actual value of transactions at the group of entities over the duration of time; determining (308), based on a second subset of the retrieved historical transaction insight data, a second value indicative of an expected value of transactions at the group of entities over the duration of time; comparing (310) the first value with the second value; and outputting (312) an event impact validation indication in response to determining that the first value is lower than the second value.

## Description

### FIELD

The present disclosure relates to a computer-implemented method and system for verifying the financial impact of a real-world event on an entity.

### BACKGROUND

Many businesses take out insurance to mitigate the risk of a loss of income as a result of a particular event. For example, a business may take out insurance that pays out in the event of property damage such as a fire or flood at the business' premises. Another form of insurance is business interruption insurance, which covers insured businesses against non-material damage business interruptions. Non-material damage interruptions are events that do not cause material damage in the manner of a fire or flood, but nevertheless have an impact on trading. For example, a burst water main may result in interruption to the water supply to certain businesses, meaning that such businesses are unable to trade. In another example, a road closure may reduce the footfall to certain businesses on a certain day, resulting in reduced income.

The process of evaluating business interruption insurance claims is complex. This is because insurers are unable to easily quantify the impact of events on businesses, meaning that it can take months to resolve a claim for business interruption insurance. Such timescales are particularly unsuitable for small businesses, which typically require faster settlement of insurance claims as a result of cash flow issues.

In general, the process for resolving a claim for business interruption involves the following steps: (i) a negative event occurs, which reduces trading at a business or stops trading entirely at the business; (ii) the business submits a claim against their business interruption insurance by notifying their insurer of the business interruption; (iii) the insurer raises a case, collects information and reviews the claim; (iv) a loss adjuster determines a settlement amount for the claim; and (v) the claim is agreed (typically after many months) and payment is made. At steps (iii) and (iv), the insurer investigates the event to determine whether the event actually occurred, and whether it affected the business. Such investigations typically involve a large paperwork assessment, including the collection of secondary and primary data. Collecting secondary data includes desktop research such as searching local news websites and social media feeds, in order to determine a degree of confidence that the event impacted the business. If the impact of the event cannot be determined using secondary data, then a loss adjuster is required to collect primary data. This involves travelling to the site of the business and collecting evidence relating to the occurrence of the event. The evidence is then sent to another team at the insurer, so that it can be evaluated. This may be an iterative process, involving the collection and evaluation of additional evidence.

Current processes of resolving claims are costly for the insurer as a result of the amount of work required to investigate whether the event affected the business. In addition, it will be appreciated from the above discussions that insurers require the technical infrastructure needed to store and process the primary and/or secondary data, so that it can be evaluated by the insurer. In view of the length of time between notification of loss from a business and resolution of a claim, insurers are required to store and process large volumes of primary and/or secondary data.

The complexity of investigating the impact of the event also means that claims are slow to be settled. The length of time required to settle business interruption claims is generally unsuited to small business cash flows. In addition, insurance policies are not generally tailored towards small businesses, and are often modified versions of generic policies for larger businesses, including complex wording and segmentation based on NAIC (National Association of Insurance Commissioners) codes.

Accordingly, there exists a need for a technical solution that can verify whether an event actually impacted a particular business. In particular, there exists a need for a technical solution that reduces an insurer's technical infrastructure requirements associated with processing and storing primary and/or secondary data.

### SUMMARY

This summary introduces concepts that are described in more detail in the detailed description. It should not be used to identify essential features of the claimed subject matter, nor to limit the scope of the claimed subject matter.

According to a first aspect of the present disclosure, there is provided a computer-implemented method of verifying a financial impact of a real-world event on a first entity, the method comprising: receiving a request to validate the financial impact of the real-world event on the first entity, wherein the request includes a duration of time over which the real-world event occurred; retrieving, from a data store, historical transaction insight data relating to transactions at a group of entities including the first entity; determining, based on a first subset of the retrieved historical transaction insight data corresponding to the duration of time, a first value indicative of an actual value of transactions at the group of entities over the duration of time; determining, based on a second subset of the retrieved historical transaction insight data, a second value indicative of an expected value of transactions at the group of entities over the duration of time; comparing the first value with the second value; and outputting an event impact validation indication in response to determining that the first value is lower than the second value.

The computer-implemented method of the first aspect provides a mechanism for verifying the financial impact of a real-world event on an entity based on transaction insight data for a group of entities that includes the entity. The financial impact of the real-world event on the entity can be verified without requiring the collection, processing and storage of primary and/or secondary data associated with existing claims handling and loss adjustment processes. In particular, the financial impact of the real-world event on the entity is verified using transaction insight data derived from transactions carried out using payment cards at the group of entities. By implementing the computer-implemented method of the first aspect, the technical infrastructure requirements at an insurer are reduced, because the insurer no longer requires the technical infrastructure required for storage and processing of primary and/or secondary data. In addition, the financial impact of a real-world event on an insured entity can be verified without any knowledge of the nature of the event itself.

In addition, the computer-implemented method of the first aspect provides an automated mechanism for verifying the financial impact of a real-world event on an insured entity. The automation provided by the computer-implemented method of the first aspect removes the need for the labour-intensive manual processing of claims (i.e. the claims handling and loss adjustment processes). This means that the determination of the impact of the real-world event on the insured entity is carried out more efficiently than in current processes, thereby increasing the efficiency of claim settlement. Increasing the efficiency of claim settlement reduces the amount of data processing required at the insurer, while reducing the length of time required for an insured entity to be paid, thereby increasing suitability of insurance products to the cash flows of small businesses. In particular, by automating the verification of the financial impact of a real-world event on an insured entity, payments to insured entities can also be made automatically.

The group of entities may comprise entities located in geographic proximity to one another. Alternatively or additionally, the group of entities may comprise entities offering the same goods and/or services for sale as one another.

The event impact validation indication may be output in response to determining that the first value is lower than a threshold percentage of the second value. Outputting the event impact validation indication in response to determining that the first value is lower than a threshold percentage of the second value provides an output than can be used with parametric insurance products.

Outputting the event impact validation indication may comprise: outputting, to a smart contract executed on a blockchain, the event impact validation indication, wherein the smart contract is configured to initiate a payment to the first entity in response to receiving the event impact validation indication. The use of the smart contract allows the claim settlement process to be fully automated. The use of the smart contract also provides a mechanism for the tamper-proof initiation of a payment to the insured entity in the event that conditions are met, which removes the possibility of the claim settlement process being manipulated by malicious activity at the insurer. Accordingly, the use of the smart contract increases the data security of the claim settlement process.

The method may further comprise determining a confidence value associated with the event impact validation indication, wherein the confidence value is representative of a degree of confidence that the real-world event had a financial impact on the first entity. The event impact validation indication may be output to the smart contract in response to determining that the confidence value associated with the event impact validation indication exceeds a threshold.

The historical transaction insight data may include transaction data corresponding to transactions made using payment cards at the group of entities. By using transaction insight data from payment card transactions at a group of entities, the financial impact of a real-world event can be quantified without requiring an indication of the financial impact of the real-world event to be provided.

The method may further comprise displaying the first value and the second value on a user interface. Displaying the first value and the second value on a user interface aids the insurer in evaluating a claim from the insured entity.

The method may further comprise determining a quantified event impact by determining a ratio of the first value relative to the second value. The method may further comprise outputting the quantified event impact. Outputting a quantified event impact provides an output than can be used with parametric insurance products.

The method may further comprise displaying an indication of the quantified event impact on a user interface. Displaying the indication of the quantified event impact on a user interface aids the insurer in evaluating a claim from the insured entity.

The group of entities may be located within a first geographical area, and the method may further comprise displaying, for each of a plurality of second geographical areas adjacent to the first geographical area, a ratio of a first value indicative of an actual value of transactions relative to a second value indicative of an expected value of transactions for entities located within the second geographical area.

According to a second aspect of the present disclosure, there is provided a computer-readable medium storing instructions that, when executed by one or more processors of a computing device, cause the computing device to carry out the computer-implemented method of the first aspect.

### BRIEF DESCRIPTION OF FIGURES

Specific embodiments are described below by way of example only and with reference to the accompanying drawings, in which:
FIG. 1 shows a data processing environment in which transaction data is processed.
FIG. 2 shows a schematic diagram of a user interface.
FIG. 3 shows a flowchart of a method of verifying a financial impact of a real-world event on a first entity.
FIG. 4 shows a schematic diagram of a computing device configured to implement the methods of the present disclosure.

### DETAILED DESCRIPTION

Implementations of the present disclosure are explained below with particular reference to verifying a financial impact of a real-world event on a business entity so that the entity's claim against their insurance can be validated. It will be appreciated, however, that the implementations described herein may also be applicable to other scenarios in which verification of a financial impact of a real-world event on an entity is required.

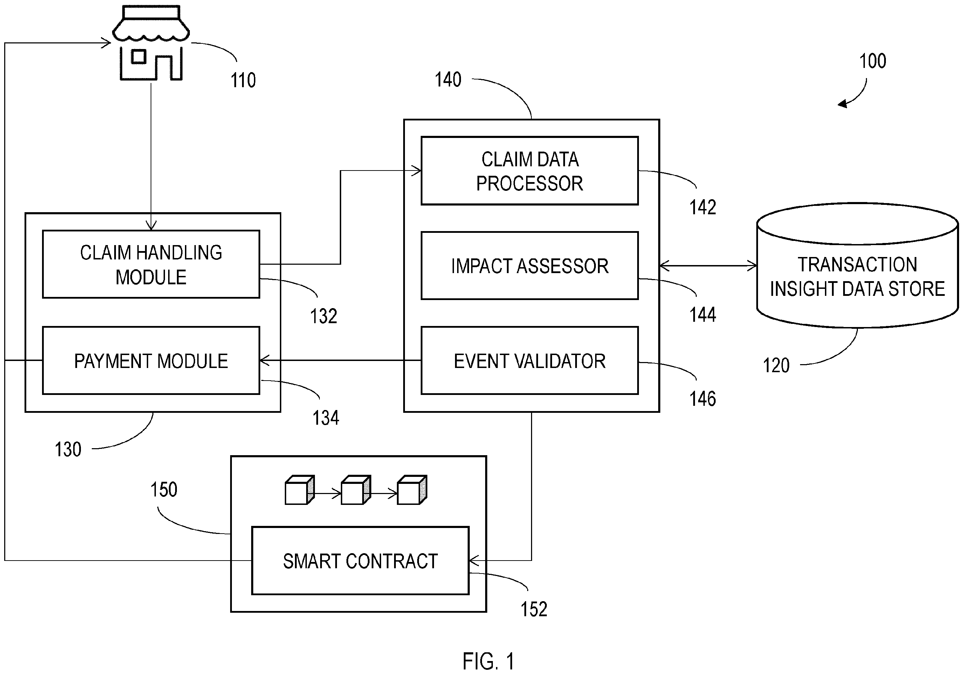

FIG. 1 is a schematic diagram of a data processing environment 100 in which transaction data is processed. As shown in FIG. 1, the data processing environment 100 includes an insured entity 110, a transaction insight data store 120, an insurer computing device 130, and an event impact validation module 140. Optionally, the data processing environment 100 also includes a smart contract 152 executed on a blockchain 150.

The insured entity 110 is a business entity that has taken out business interruption insurance with an insurer associated with the insurer computing device 130. For example, the insured entity 110 may be a small business (e.g. with between one and 249 employees) such as a coffee shop, hair salon, or fried chicken shop. The insured entity 110 offers goods (e.g. coffee, fried chicken) and/or services (e.g. hairdressing) for sale. The insured entity 110 receives payment for the goods and/or services that it offers by way of card payments made by customers. Specifically, each customer pays for goods and/or services at the insured entity 110 using a payment card issued by an issuer (e.g. the customer's bank), while the insured entity 110 receives payment for the goods and/or services via an acquirer (i.e. the insured entity's bank). Payment between the issuer and the acquirer is facilitated by a payment network such as Mastercard.

The payment network anonymises, aggregates and filters the transaction data relating to payments made by individual customers at various entities (including the insured entity 110) across various geographic locations and business sectors (e.g. coffee shops, hair salons, fast food outlets). The transaction insights are stored in the transaction insight data store 120. In one example, transaction data is aggregated over geographical areas to form geography-specific transaction insight data. By aggregating the transaction data in this way, the transaction data associated with a particular entity cannot be identified from the transaction insight data. For example, transaction insight data may be provided for a grid of square geographical areas of approximately 250 metres by 250 metres, wherein transaction insight data is provided for each grid square with at least five retail entities. In an additional or alternative example, transaction data is aggregated by business sector to form sector-specific transaction insight data. Again, by aggregating the transaction data in this way, the transaction data associated with a particular entity cannot be identified from the transaction insight data. The transaction insight data stored in the transaction insight data store 120 can be filtered to provide transaction insight data for different time periods (e.g. a one-day period, weekend period, one-week period, morning, afternoon, etc.).

The insurer computing device 130 comprises a claim handling module 132 and a payment module 134. The claim handling module 132 receives a claim (i.e. a notification of loss) from the insured entity 110. The claim includes an identification of the insured entity 110 (optionally including a geographic location of the insured entity 110), a claim date (or other time period) on which a real-world event occurred, and an indication that there was an interruption to the business of the insured entity 110 on the claim date. The claim handling module 132 is configured to pass data relating to the claim from the insured entity 110 to the event impact validation module 140 (e.g. over a network (not shown)).

As described further below, the payment module 134 is configured to receive an event impact validation indication from the event impact validation module 140. The event impact validation indication is received at the payment module 134 in response to the event impact validation module 140 determining that the real-world event had a financial impact on the insured entity 110 on the claim date.

The event impact validation module 140 comprises a claim data processor 142, an impact assessor 144, and an event validator 146. In one example, the event impact validation module 140 is accessed from the insurer computing device 130 via an application programming interface (API). In this case, the event impact validation module 140 may be implemented in the form of software running on a computing device that is distinct from the insurer computing device 130. In an alternative example, the event impact validation module 140 is implemented in the form of software running on the insurer computing device 130, and may therefore supplement the claim handling module 132 and the payment module 134 of the insurer computing device 130.

The claim data processor 142 is configured to receive, from the claim handling module 132 of the insurer computing device 130, the data relating to the claim. The claim data processor 142 is also configured to retrieve, from the transaction insight data store 120, historical transaction insight data for a group of entities (which includes the insured entity 110). The retrieved historical transaction insight data includes a first subset of data relating to transactions on the claim date (or over the claim period). The retrieved historical transaction insight data also includes a second subset of data relating to transactions prior to the claim date (or claim period). For example, the claim data processor 142 may retrieve transaction insight data indicating the value of transactions at the group of entities on a date a week before the claim date, on a date a month before the claim date, and on a date a year before the claim date.

In one example, the group of entities are entities that are located in geographic proximity to one another, such as within a geographic area having specific dimensions (e.g. a 250 metre by 250 metre geographic area). Other sizes and shapes of geographic areas may also be implemented. For example, the group of entities may be entities that are located within triangular, rectangular or hexagonal geographic areas, or any form of polygonal grid area, whether regular or irregular. The geographic area may have a width of 1500 m, 1250 m, 1000 m, 900 m, 800 m, 700 m, 600 m, 500 m, 450 m, 400 m, 350 m, 300 m, 250 m, 200 m, 150 m, 125 m, 100 m, 75 m, 50 m, or 25 m and/or a height of 1500 m, 1250 m, 1000 m, 900 m, 800 m, 700 m, 600 m, 500 m, 450 m, 400 m, 350 m, 300 m, 250 m, 200 m, 150 m, 125 m, 100 m, 75 m, 50 m, or 25 m. As a further example, the group of entities may be entities that are located within a particular radius or distance of the insured entity 110, such as within 1500 m, 1250 m, 1000 m, 900 m, 800 m, 700 m, 600 m, 500 m, 450 m, 400 m, 350 m, 300 m, 250 m, 200 m, 150 m, 125 m, 100 m, 75 m, 50 m, or 25 m of the insured entity 110.

In another example, the group of entities are entities that offer the same goods and/or services for sale as one another. For example, if the insured entity 110 is a coffee shop, then the group of entities may include coffee shops. In a further example, the group of entities are both located geographically proximate to one another and offer the same goods and/or services for sale as one another.

The claim data processor 142 passes the retrieved historical transaction insight data to the impact assessor 144. The impact assessor 144 determines, from the retrieved historical transaction insight data, a first value indicative of the actual value of transactions at the group of entities on the claim date. Specifically, the impact assessor 144 determines the first value from the first subset of data (i.e. the historical transaction insight data on the claim date). In addition, the impact assessor 144 determines, from the retrieved historical transaction insight data, a second value indicative of the expected value of transactions at the group of entities on the claim date. Specifically, the impact assessor 144 determines the second value from the second subset of data (i.e. the historical transaction insight data prior to the claim date). The second value is an estimated index value of the transactions for a particular date, based on prior transaction data. For example, where the claim date is a one-day period, the second value may be based on: an indicative value of transactions over a one-day period that is a week prior to the claim date; an indicative value of transactions over a one-day period that is a month prior to the claim date; and/or an indicative value of transactions over a one-day period that is a year prior to the claim date.

Each of the first and second values may be an index value. In one example, the first value (which indicates the actual value of transactions at the group of entities on the claim date) and the second value (which indicates the expected value of transactions at the group of entities on the claim date) may each be an index value that is relative to an average value of transactions over a particular period (week, month, year, etc.). For example, if an average value of transactions has a baseline of '1', then a first value of 0.6 may indicate that the actual value of transactions at the group of entities on the claim date was 60% of the average value of transactions at the group of entities. In addition, a second value of 1.2 may indicate that the expected value of transactions at the group of entities on the claim date was 20% higher than the average value of transactions at the group of entities. Alternatively, instead of index values, the first and second values may be indicative monetary values that indicate, respectively, an actual and expected value of transactions at the group of entities on the claim date. In the event that permissions are configured so that actual monetary data relating to the value of transactions at the group of entities can be used, then the first value may be the actual monetary value of transactions at the group of entities on the claim date.

The impact assessor 144 passes the determined first and second values to the event validator 146. The event validator 146 compares the first value with the second value . If the first value is lower than the second value , then the event validator 146 determines that the real-world event has had a financial impact on the insured entity 110. Continuing the example above, the event validator 146 compares a first value of 0.6 with a second value of 1.2, meaning that the event validator 146 determines that the real-world event has had a financial impact on the insured entity 110. The event validator 146 then outputs an event impact validation indication, which indicates that the real-world event has had a financial impact on the insured entity 110.

In one example, the event validator 146 outputs the event impact validation indication to the payment module 134 of the insurer computing device 130. The payment module 134 may then send a payment to the insured entity 110 in response to receiving the event impact validation indication from the event validator 146.

In an alternative example, the event validator 146 outputs the event impact validation indication to the smart contract 152 executed on the blockchain 150. In this example, the smart contract 152 is configured to initiate a payment to the insured entity 110 in response to receiving the event impact validation indication. Accordingly, the smart contract 152 provides a tamper-proof mechanism for automating payment to the insured entity 110 in the event that the real-world event is determined to have financially impacted the insured entity 110.

The event validator 146 can also quantify the financial impact on the insured entity 110 by comparing the first value with the second value. Specifically, the event validator 146 quantifies the financial impact of the real-world event on the insured entity 110 by determining a quantified event impact for the group of entities. The event validator 146 determines the quantified event impact by determining a ratio of the first value relative to the second value. Continuing, again, the example above, for a first value of 0.6 and a second value of 1.2, the first value is 50% of the second value, indicating that the actual value of transactions at the group of entities on the claim date is 50% of the expected value of transactions at the group of entities on the claim date. Consequently, the event validator 146 quantifies the financial impact of the real-world event on the insured entity 110 as a 50% reduction in transactions at the insured entity 110.

In one example, the insured entity 110 has taken out parametric insurance with a particular insurer associated with the insurer computing device 130. In this case, the payment module 134 is configured to initiate a payment to the insured entity 110 if a parameter-based condition is met. For example, the payment module 134 may be configured to initiate a payment to the insured entity 110 if there has been a reduction in transactions of more than 40%. Accordingly, where the event validator 146 quantifies the financial impact on the insured entity 110, parametric insurance products are enabled. Specifically, upon receipt of a quantification of the financial impact on the insured entity 110 from the event validator 146, the payment module 134 may automatically initiate a payment to the insured entity 110, if the financial impact satisfies the parameter-based condition for initiating payment.

Where the event validator 146 quantifies the financial impact on the insured entity 110, the event impact validation indication may indicate the quantified financial impact on the insured entity 110 (e.g. 50% reduction in transactions). Where the event validator 146 outputs the event impact validation indication to the smart contract 152, the smart contract 152 may be configured to initiate payment to the insured entity 110 only if the quantified financial impact exceeds a threshold financial impact. For example, the smart contract 152 may be configured to initiate payment to the insured entity 110 only if the quantified financial impact is greater than a 30% reduction in transactions. This threshold can also be expressed in terms of the percentage of the expected value of transactions (i.e. that the actual value of transactions at the group of entities on the claim date is less than 70% of the expected value of transactions at the group of entities on the claim date)

Alternatively or additionally, the event impact validation indication itself may only be output by the event validator 146 if the quantified financial impact is below a threshold percentage of the expected value of transactions. For example, the event impact validation indication may only be output by the event validator 146 if the actual value of transactions at the group of entities on the claim date is less than 70% of the expected value of transactions at the group of entities on the claim date.

In addition, the event validator 146 may also be configured to determine a confidence value associated with the event impact validation indication. The confidence value may be associated with the number of entities in the group of entities. In particular, if the group of entities includes a high number of entities, then event validator 146 determines a high confidence value associated with the event impact validation indication. On the other hand, if the group of entities includes a low number of entities, then the event validator 146 determines a low confidence value associated with the event impact validation indication. In the example in which the group of entities are located in geographic proximity to one another, the event validator 146 may determine a high confidence value for geographic areas in town or city centres (having a higher density of entities), and a lower confidence value for geographic areas in more residential areas.

The confidence value may also be lower where the event validator 146 for real-world events that occur at the same time as large-scale one-off circumstances (for example, real-world events that occur on the same day as jubilee celebrations or coronations). This is because the event validator 146 lacks a precedent as to the normal level of business activity during such circumstances. Accordingly, for claim dates that coincide with large-scale one-off circumstances, the event validator 146 may determine a low confidence value for the event impact validation indication.

In a first example, the group of entities (including the insured entity 110) are located in geographic proximity to one another. The insured entity 110 suffers a business interruption on a particular date as a result of a road closure caused by a burst water main. The group of entities are located on the same road as the insured entity 110, and also suffer business interruptions as a result of the road closure. The insured entity 110 submits a claim that its business was interrupted on the date of the road closure.

In a second example, the group of entities (including the insured entity 110) are all fried chicken shops, and are situated in different locations. The group of entities therefore all offer the same goods for sale as one another. The insured entity 110 suffers a business interruption on a particular date as a result of an avian flu outbreak. The group of entities also suffer business interruptions as a result of the avian flu outbreak. The insured entity 110 submits a claim that its business was interrupted on the date of the avian flu outbreak.

In each case, the event impact validation module 140 retrieves historical transaction insight data for the group of entities, and determines the first value indicative of an actual value of transactions at the group of entities on the claim date and the second value indicative of an expected value of transactions at the group of entities on the claim date. By comparing the first value and the second value, the event impact validation module 140 identifies that the actual value of transactions at the group of entities on the claim date was lower than the expected value of transactions at the group of entities on the claim date. The event impact validation module 140 therefore verifies that a real-world event had a financial impact on the insured entity 110, and outputs an event impact validation indication. The event impact validation module 140 can therefore verify the financial impact of the real-world event without knowledge of the nature of the event itself.

It will be appreciated from the above discussion that the event impact validation module 140 of the present disclosure provides a mechanism for verifying the financial impact of a real-world event on an entity, without requiring the collection, processing and storage of primary and/or secondary data associated with existing claims handling and loss adjustment processes. In particular, the event impact validation module 140 verifies the financial impact of a real-world event on a first entity by using transaction insight data derived from transactions carried out using payment cards at a group of entities that includes the first entity. By implementing the event impact validation module 140, the technical infrastructure requirements at an insurer are reduced, because the insurer no longer requires the technical infrastructure required for storage and processing of primary and/or secondary data.

In addition, the event impact validation module 140 is capable of determining the financial impact of a real-world event on an insured entity without any knowledge of the nature of the event itself. By using transaction insight data from payment card transactions at a group of entities, the event impact validation module 140 can also quantify the financial impact of the real-world event, without requiring an indication of the financial impact of the real-world event to be provided.

Consequently, the event impact validation module 140 provides an automated mechanism for verifying and quantifying the financial impact of a real-world event on an insured entity. The automation provided by the event impact validation module 140 removes the need for the labour-intensive manual processing of claims (i.e. the claims handling and loss adjustment processes). This means that the determination of the impact of the real-world event on the insured entity is carried out more efficiently than in current processes, thereby increasing the efficiency of claim settlement. Increasing the efficiency of claim settlement reduces the amount of data processing required at the insurer, while reducing the length of time required for an insured entity to be paid, thereby increasing suitability of insurance products to the cash flows of small businesses.

In addition, by quantifying the financial impact of a real-world event on an insured entity, parametric insurance is enabled. Implementing the event impact validation module 140 therefore increases the range of insurance products that can be provided by an insurer.

By automating the verification of the financial impact of a real-world event on an insured entity, payments to insured entities can be made automatically. Specifically, the process of claim settlement can be reduced to inputting a date (or other time period) of a claim, along with a location and/or a sector of the entity. Once this data has been input, the claim settlement process can be fully automated (either by automation of the functionality of the payment module 134, or through the use of the smart contract 152). The systems and methods disclosed herein also allow payments to be fully automated, so that when a financial impact (i.e. a drop in transactions) is detected, a payment is automatically made to the insured entity 110 without any action on the part of the insured entity 110. Accordingly, in some examples, no data is received from the insured entity 110 itself prior to commencement of the method for validating the financial impact of a real-world event on the insured entity 110.

The use of the smart contract 152 also provides a mechanism for the tamper-proof initiation of a payment to the insured entity 110 in the event that conditions are met, which removes the possibility of the claim settlement process being manipulated by malicious activity at the insurer. Accordingly, the use of the smart contract 152 increases the data security of the claim settlement process.

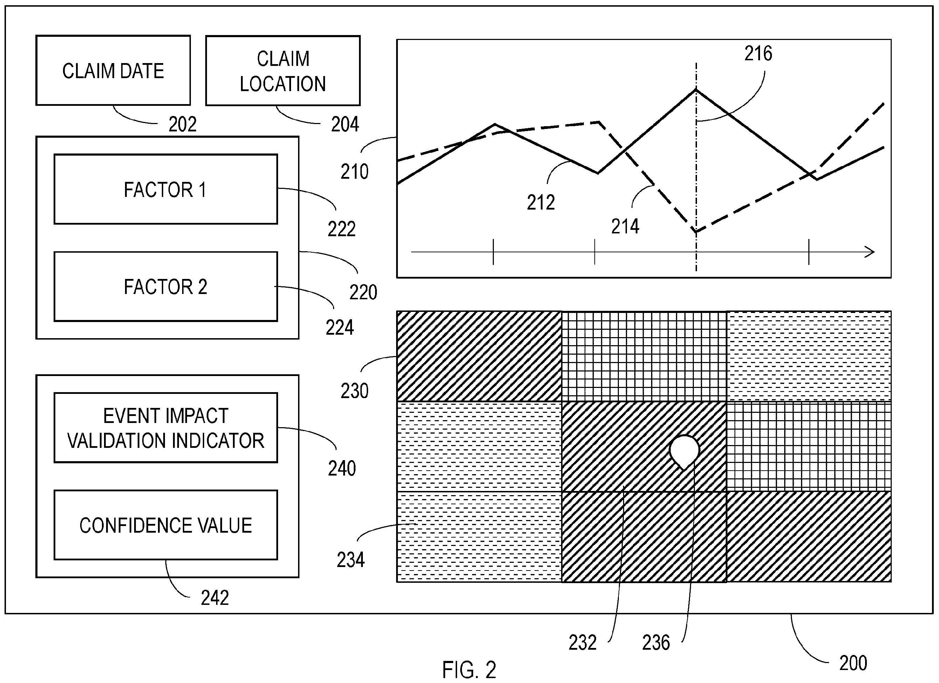

The event impact validation module 140 may be configured to provide a user interface such as the user interface 200 shown in FIG. 2. For example, the user interface 200 may be output by the event validator 146 to a display of the insurer computing device 130.

As shown in FIG. 2, the user interface 200 includes, in one example, a claim date input field 202 and a claim location input field 204. In alternative examples, a business sector input field may be provided as an alternative to, or in addition to the claim location input field 204. The user interface 200 also includes a transaction value timeline 210 showing values indicative of the expected value of transactions 212 at the group of entities (e.g. second values) over time, and values indicative of the actual value of transactions 214 at the group of entities (e.g. first values) over time. The transaction value timeline 210 also includes a claim date indicator 216 indicating the date of the claim as received via the claim date input field 202. As shown in the example transaction value timeline 210 of FIG. 2, the actual value of transactions 212 is lower than the expected value of transactions 214 (because the first value is lower than the second value on the region of the timeline indicated by the claim date indicator 216), resulting in a verification that a real-world event had a financial impact on the insured entity 110.

The user interface 200 also includes a list of factors 220 associated with the claim date. For example, where the claim date is a Sunday, the list of factors 220 may include a first factor 222 indicating that business activity is generally lower on Sundays. In addition, a second factor 224 may indicate that the claim date was Mothers Day. The list of factors 220 may provide a visual guide for an insurer to interpret the data shown in the transaction value timeline 210.

The user interface 200 shown in FIG. 2 also includes a heat map 230. The heat map 230 includes an indication of a first geographical area 232 in which the insured entity 110 is located (e.g. as shown by the entity location indicator 236). The heat map 230 also includes indications of a plurality of second geographical areas 234 located adjacent to the first geographical area 232. In the example shown in FIG. 2, the heat map shows eight second geographical areas 234 surrounding the first geographical area 232. The heat map 230 also shows an indication of the financial impact of a real-world event on groups of entities located in each of the geographical areas 232, 234. Showing an indication of the financial impact of the real-world event on groups of entities located in the second geographical areas 234 allows the impact of events that affect many geographical areas to be indicated. Showing this information therefore provides important contextual information that may help an insurer to interpret the data shown on the user interface 200. In addition, an insured entity 110 may be located on the boundary of two grid squares. Providing an indication of the financial impact of the real-world event on entities located in the two grid squares that the insured entity 110 lies on the boundary of therefore provides additional information that may help an insurer to interpret the data shown on the user interface 200. In the example shown in FIG. 2, diagonal stripes indicate geographical areas 232, 234 in which the financial impact of the real-world event on the entities located in that geographical area 232, 234 was highly negative (i.e. the actual value of transactions 212 was significantly lower than the expected value of transactions 214). A checked pattern is used to indicate geographical areas 232 in which the financial impact of the real-world event on the entities located in that geographical area 232 was negative but low (i.e. the actual value of transactions 212 was lower, but not significantly lower, than the expected value of transactions 214). A dashed pattern is used to indicate geographical areas 232 in which there was no financial impact of the real-world event on the entities located in that geographical area 232.

Finally, it can be seen that the user interface 200 includes an event impact validation indication output 240 showing the event impact validation indication, and a confidence value output 242 showing the confidence value associated with the event impact validation indication. In one example, these outputs 240, 242 can be provided to the insurer so that the insurer can decide whether to initiate payment to the insured entity. In alternative examples, the event impact validation indication can be provided directly to the payment module 134 of the insurer computing device 130 or to the smart contract 152, in which case the outputs 240, 242 may be provided for information only. In further examples, the event impact validation indication can be automatically output to the payment module 134 of the insurer computing device 130 or to the smart contract 152 if certain conditions are met (e.g. a high negative financial impact and a high confidence value), and can be output to the insurer computing device 130 so that a decision on the claim can be made in the event that such conditions are not met.

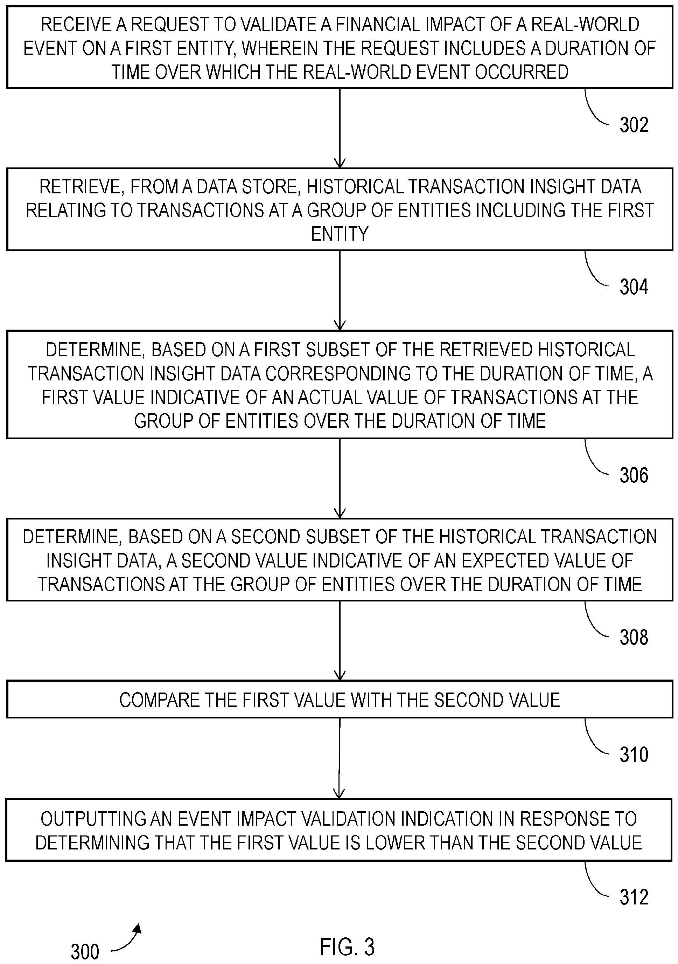

FIG. 3 is a flowchart of a method 300 of verifying a financial impact of a real-world event on a first entity (e.g. the insured entity 110 described above). The method 300 may be implemented using the computer apparatus 400 described below, in order to carry out the functionality of the event impact validation module 140 described above. In particular, a computer-readable medium may include instructions that, when executed by a processor of a computer apparatus (e.g. a processor 402 of the computer apparatus 400 described below), cause the computer apparatus to implement the method 300.

At 302, a request to validate the financial impact of the real-world event on a first entity (e.g. the insured entity 110) is received at the event impact validation module 140 (e.g. at the claim data processor 142). The request includes a duration of time over which the real-world event occurred.

At 304, the event impact validation module 140 (in one example, the impact assessor 144) retrieves, from a data store (e.g. the transaction insight data store 120), historical transaction insight data relating to transactions at a group of entities including the first entity. In one example, the historical transaction insight data includes transaction data corresponding to transactions made using payment cards at the group of entities. In one example, the group of entities comprises entities located in geographic proximity to one another. In an alternative example, the group of entities comprises entities offering the same goods and/or services for sale as one another.

At 306, the event impact validation module 140 (in one example, the impact assessor 144) determines, based on a first subset of the retrieved historical transaction insight data corresponding to the duration of time, a first value indicative of an actual value of transactions at the group of entities over the duration of time. For example, the first subset of the retrieved historical transaction insight data may be historical transaction insight data for the claim date.

At 308, the event impact validation module 140 (in one example, the impact assessor 144) determines, based on a second subset of the historical transaction insight data, a second value indicative of an expected value of transactions at the group of entities over the duration of time. For example, the second subset of the retrieved historical transaction insight data may be historical transaction insight data preceding the claim date.

At 310, the event impact validation module 140 (in one example, the event validator 146) compares the first value with the second value.

At 312, the event impact validation module 140 (in one example, the event validator 146) outputs an event impact validation indication in response to determining that the first value is lower than the second value. In one example, the event impact validation indication is output at 312 in response to the event validator 146 determining that the first value is lower than a threshold percentage of the second value.

In one example, the event validator 146 outputs the event impact validation indication at 312 to a smart contract executed on a blockchain (e.g. the smart contract 152). The smart contract may be configured to initiate a payment to the first entity in response to receiving the event impact validation indication.

In one example, the event validator 146 also determines, at 312, a confidence value associated with the event impact validation indication, wherein the confidence value is representative of a degree of confidence that the real-world event had a financial impact on the first entity. In a particular instance of this example, the event validator 146 outputs the event impact validation indication at 312 to the smart contract in response to determining that the confidence value associated with the event impact validation indication exceeds a threshold.

In one example, the event impact validation module 140 displays the first value and the second value on a user interface (e.g. the user interface 200).

In one example, the event validator 146 also determines a quantified event impact for the group of entities, by determining a ratio of the first value relative to the second value. In a particular instance of this example, the event validator 146 outputs the quantified event impact. In another particular instance of this example, the event impact validation module 140 displays an indication of the quantified event impact on a user interface (e.g. the user interface 200). In one example, the group of entities is located within a first geographical area (e.g. the first geographical area 232), and the event impact validation module 140 also displays, for each of a plurality of second geographical areas (e.g. the plurality of second geographical areas 234) adjacent to the first geographical area, a ratio of a first value indicative of an actual value of transactions at the entities located within the second geographical area over the duration of time relative to a second value indicative of an expected value of transactions at the entities located within the second geographical area over the duration of time.

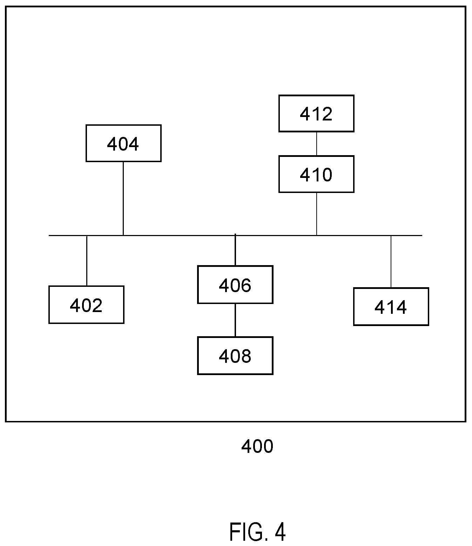

FIG. 4 is a schematic and simplified representation of a computer apparatus 400 which can be used to perform the methods described herein (e.g. the method 300 described above), either alone, in combination with other computer apparatuses or as part of a "cloud" computing arrangement.

The computer apparatus 400 comprises various data processing resources such as a processor 402 (in particular a hardware processor) coupled to a central bus structure. Also connected to the bus structure are further data processing resources such as memory 404. A display adapter 406 connects a display device 408 to the bus structure. One or more user-input device adapters 410 connect a user-input device 412, such as a keyboard and/or a mouse to the bus structure. One or more communications adapters 414 are also connected to the bus structure to provide connections to other computer systems 400 and other networks (e.g. to the touchpoints 170 and one or more adapters). The one or more communications adapters 414 may be configured to output data to a smart contract executed on a blockchain, for example, by outputting the data using a particular protocol used by the smart contract.

In operation, the processor 402 of computer system 400 executes a computer program comprising computer-executable instructions that may be stored in memory 404. When executed, the computer-executable instructions may cause the computer system 400 to perform one or more of the methods described herein, such as the method 300 described above. The results of the processing performed may be displayed to a user via the display adapter 406 and display device 408. User inputs for controlling the operation of the computer system 400 may be received via the user-input device adapters 410 from the user-input devices 412.

It will be apparent that some features of computer system 400 shown in FIG. 4 may be absent in certain cases. For example, one or more of the plurality of computer apparatuses 400 may have no need for display adapter 406 or display device 408. This may be the case, for example, for particular server-side computer apparatuses 400 which are used only for their processing capabilities and do not need to display information to users. Similarly, user input device adapter 410 and user input device 412 may not be required. In its simplest form, computer apparatus 400 comprises processor 402 and memory 404.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

## Claims

1. A computer-implemented method of verifying a financial impact of a real-world event on a first entity, the method comprising:
receiving a request to validate the financial impact of the real-world event on the first entity, wherein the request includes a duration of time over which the real-world event occurred;
retrieving, from a data store, historical transaction insight data relating to transactions at a group of entities including the first entity;
determining, based on a first subset of the retrieved historical transaction insight data corresponding to the duration of time, a first value indicative of an actual value of transactions at the group of entities over the duration of time;
determining, based on a second subset of the retrieved historical transaction insight data, a second value indicative of an expected value of transactions at the group of entities over the duration of time;
comparing the first value with the second value; and
outputting an event impact validation indication in response to determining that the first value is lower than the second value.

2. A computer-implemented method according to claim 1, wherein the group of entities comprises entities located in geographic proximity to one another.

3. A computer-implemented method according to claim 1 or claim 2, wherein the group of entities comprises entities offering the same goods and/or services for sale as one another.

4. A computer-implemented method according to any of claims 1 to 3, wherein the event impact validation indication is output in response to determining that the first value is lower than a threshold percentage of the second value of transactions.

5. A computer-implemented method according to any of claims 1 to 4, wherein outputting the event impact validation indication comprises:
outputting, to a smart contract executed on a blockchain, the event impact validation indication, wherein the smart contract is configured to initiate a payment to the first entity in response to receiving the event impact validation indication.

6. A computer-implemented method according to any of claims 1 to 5, further comprising:
determining a confidence value associated with the event impact validation indication, wherein the confidence value is representative of a degree of confidence that the real-world event had a financial impact on the first entity.

7. A computer-implemented method according to claim 6 when dependent on claim 5, wherein the event impact validation indication is output to the smart contract in response to determining that the confidence value associated with the event impact validation indication exceeds a threshold.

8. A computer-implemented method according to any of claims 1 to 7, wherein the historical transaction insight data includes transaction data corresponding to transactions made using payment cards at the group of entities.

9. A computer-implemented method according to any of claims 1 to 8, further comprising displaying the first value and the second value on a user interface.

10. A computer-implemented method according to any of claims 1 to 9, further comprising determining a quantified event impact by determining a ratio of the first value relative to the second value.

11. A computer-implemented method according to claim 10, further comprising outputting the quantified event impact.

12. A computer-implemented method according to claim 10 or claim 11, further comprising displaying an indication of the quantified event impact on a user interface.

13. A computer-implemented method according to claim 12, wherein the group of entities is located within a first geographical area, and wherein the method further comprises displaying, for each of a plurality of second geographical areas adjacent to the first geographical area, a ratio of a first value indicative of an actual value of transactions relative to a second value indicative of an expected value of transactions for entities located within the second geographical area.

14. A computer-readable medium storing instructions that, when executed by one or more processors of a computing device, cause the computing device to carry out the computer-implemented method of any of claims 1 to 13.
